## Europäisches Patentamt
## European Patent Office
## Office européen des brevets

(19)

(11) Numéro de publication: **0 223 718**
**B1**

(12) # FASCICULE DE BREVET EUROPEEN

(45) Date de publication du fascicule du brevet:
**25.01.89**

(51) Int. Cl.⁴: **B01F 5/00**, B01D 1/20

(21) Numéro de dépôt: **86420239.5**

(22) Date de dépôt: **22.09.86**

(54) Dispositif pour la mise en contact de fluides se présentant sous la forme de phases différentes.

(30) Priorité: **27.09.85 FR 8514566**

(43) Date de publication de la demande:
**27.05.87 Bulletin 87/22**

(45) Mention de la délivrance du brevet:
**25.01.89 Bulletin 89/4**

(84) Etats contractants désignés:
**BE DE GB IT SE**

(56) Documents cités:
**DE-A- 2 703 064**
**FR-A- 1 005 450**
**FR-A- 1 071 111**
**FR-A- 1 146 287**
**FR-A- 2 266 095**

(73) Titulaire: **OMYA S.A., 35, Quai André Citroen,**
**F-75725 Paris Cedex 15(FR)**

(72) Inventeur: **Barroyer, Bernard, 3, Quartier Parrocel,**
**F-13750 Plan d'Orgon(FR)**

(74) Mandataire: **Gaucherand, Michel, OMYA S.A.**
**Département Propriété Industrielle 35, Cours Aristide**
**Briand, F-69300 Caluire(FR)**

ACTORUM AG

## Description

L'invention concerne un dispositif pour la mise en contact de fluides dont l'un au moins se présente sous la forme d'une phase gazeuse.

L'invention concerne en particulier le traitement par un gaz à température élevée de produits sous forme liquide, comportant ou non des matières solides en suspension.

La mise en contact de fluides divers entre eux, se présentant sous la forme d'au moins une phase gazeuse et chaude, et de phases liquides, semi-liquides ou pâteuses contenant ou non des matières solides en suspension, soulève depuis longtemps de nombreuses difficultés à l'homme de l'Art. Ce problème se rencontre dans bon nombre d'applications, telles que par exemple le traitement d'acides résiduaires, d'eaux résiduaires ou encore le séchage de matières solides en suspension dans une phase liquide. Dans tous les cas, le traitement consiste à soumettre le liquide ou la suspension à l'action d'un gaz porté à température élevée, tel que fumées de combustion ou air chaud, de façon que par l'action conjuguée d'un transfert thermique et d'un transfert de masse, il y ait réaction entre la ou les phases gazeuses et la phase liquide aboutissant à l'évaporation ou à la décomposition du liquide et à une séparation des particules solides qui peuvent ainsi après modification de leur état superficiel être récupérées. La conduite d'un tel traitement nécessite la réalisation d'un contact aussi parfait que possible entre les différentes phases mises en présence de façon à réaliser un transfert thermique de la phase gazeuse et chaude à la phase liquide avec le maximum d'efficacité.

Différents dispositifs ont été proposés en vue de cette réalisation. On a décrit notamment dans le brevet français 2 257 326 un procédé de mise en contact de substances se présentant dans des phases différentes, l'une étant gazeuse, l'autre étant à disperser telle que liquide, solution ou suspension.

Ce procédé consiste :
– à communiquer à la phase gazeuse un mouvement hélicoïdal tourbillonnaire avant que cette phase ne se mélange avec la phase liquide à disperser,
– à introduire la phase liquide en un courant rectiligne coaxial à l'axe de symétrie de la phase gazeuse,
– à impartir à cette phase gazeuse une quantité de mouvement très supérieure à celle de la phase liquide à disperser, suffisante pour provoquer au point d'impact à la fois la dispersion de cette phase et sa prise en charge par la phase gazeuse.

On obtient ainsi un contact aussi intime que possible facilitant la réaction entre les deux phases.

Le traitement est de type flash et peut s'accompagner d'un fort écart de température entre les deux phases.

Dans ce même brevet, l'on décrit et revendique aussi les moyens à mettre en œuvre pour obtenir une mise en contact des substances.

Le dispositif proposé comporte tout d'abord une enveloppe externe de révolution se terminant à sa partie inférieure par un élément tronconique dont la petite base constitue une ouverture circulaire de section restreinte et comportant à la partie supérieure une paroi étanche livrant passage à un conduit d'introduction coaxial à l'enveloppe et qui lui est solidaire. L'extrémité aval de ce conduit débouche à une distance du plan moyen de l'ouverture circulaire comprise entre 0 et le rayon de cette ouverture, la section externe de la tubulure interne étant au maximum le quart de la section de l'ouverture de section restreinte.

Le dispositif proposé comporte de plus un moyen pour introduire dans l'enveloppe autour du conduit coaxial la phase gazeuse à mettre en contact en lui conférant un mouvement hélicoïdal symétrique par rapport à l'axe confondu du conduit d'introduction et de l'enveloppe ainsi qu'un récipient placé de façon contiguë à l'aval de ladite enveloppe constituant une enceinte de séparation des phases. La partie supérieure de ce récipient est en forme de cône divergent relié par son sommet à l'ouverture circulaire et son axe de révolution est confondu avec celui de l'enveloppe externe.

Dans ce dispositif, le fluide gazeux en mouvement hélicoïdal voit sa vitesse croître au fur et à mesure qu'il s'écoule dans l'espace tronconique délimité par la partie inférieure de l'enveloppe externe et par le conduit d'introduction. Cette vitesse est maximale au voisinage du passage de l'ouverture circulaire.

Il donne ensuite naissance au-delà du débouché de cette ouverture à un ensemble de trajectoires réparties selon un hyperboloïde dont l'axe est confondu avec celui de l'ouverture. Ces trajectoires divergent jusqu'à rencontrer les parois du récipient aval sur lesquelles elles engendrent à nouveau un mouvement de rotation pseudo-hélicoïdal. L'ensemble comprenant la sortie en forme de convergent de l'enveloppe externe de révolution et la partie haute divergente du récipient a l'allure d'une tuyère.

Différentes variantes ont été imaginées par la suite au dispositif décrit dans le brevet français 2 257 326 en vue d'augmenter l'efficacité du contact entre les phases et d'adapter le fonctionnement du dispositif soit au traitement de fluides chauds, soit même à un processus de combustion.

En particulier, l'application du procédé au cas d'une combustion est décrite dans le brevet français 2 276 086.

La substance combustible peut entrer dans l'enceinte de réaction à l'état de gaz ou de liquide et constitue le courant rectiligne axial.

Le courant hélicoïdal peut être constitué par des gaz susceptibles de réagir avec le courant rectiligne axial. Dans le cas d'une combustion, ce gaz est avantageusement de l'air.

L'écoulement et la répartition des trajectoires du courant gazeux hélicoïdal sont tels qu'une dépression est créée dans la zone axiale de ce courant au débouché de l'ouverture circulaire. Cette dépression a pour effet de provoquer une aspiration du courant rectiligne axial du combustible, ce qui a pour avantage, tout en favorisant le mélange des phases, de limiter la pression nécessaire à l'injection de ce combustible.

L'inflammation de ce combustible est assurée par un dispositif classique tel qu'une bougie entres les électrodes de laquelle éclate une étincelle.

De même, l'on connaît grâce au brevet français 2 404 173 une variante du même dispositif comportant coaxialement une chambre amont de génération de flamme et une chambre aval dite de combustion, les dites chambres communiquant entre elles par une zone restreinte constituée par exemple par une zone de convergence suivie d'une partie cylindrique formant un col.

Dans la première chambre amont de génération de flamme, on crée un écoulement "puits-tourbillons" symétrique avec un gaz comburant, on introduit selon une symétrie axiale un fluide carburant et l'on provoque la formation d'une flamme.

Dans la deuxième chambre aval, on introduit une phase gazeuse à traiter dans la flamme issue de la première zone, ladite phase gazeuse pouvant être constituée par des matières combustibles thermodégradables se transformant chimiquement sous l'action de la chaleur.

Enfin, dans le brevet français 2 431 321, on connaît un dispositif amélioré selon lequel on réalise une combustion dans une chambre de réaction comportant à son extrémité aval un convergent-divergent dont la section la plus faible constitue un passage restreint, génère un courant de fumées chaudes circulant en un mouvement hélicoïdal symétrique à travers le passage restreint et introduit par un conduit approprié dans la zone de dépression de l'écoulement "puits-tourbillons" créé par le courant de fumées, selon son axe de symétrie, une phase liquide, semi-liquide ou pâteuse.

Le conduit d'introduction de la phase liquide, semi-liquide ou pâteuse débouche à la hauteur de l'espace restreint dans l'axe de révolution de l'enveloppe externe.

L'efficacité de fonctionnement de tels dispositifs destinés à mettre en contact au moins deux phases dont l'une est gazeuse et chaude est conditionnée par de nombreux paramètres, dont l'un des plus importants consiste à obtenir un parfait mélange de la phase liquide, semi-liquide ou pâteuse introduite avec la phase gazeuse en mouvement. Ceci implique que la phase gazeuse présente au point d'impact avec la phase liquide un moment cinétique suffisant pour provoquer une dispersion de fines gouttelettes de liquide dans le volume de gaz et leur prise en charge par ce gaz selon une répartition homogène, à chaque gouttelette étant associé un volume de fumées correspondant.

Ce résultat ne peut être obtenu qu'à condition :
– que l'écoulement gazeux possède près de son impact avec la phase liquide une symétrie parfaite autour de son axe de révolution,
– que la position de cet impact au voisinage de l'espace restreint soit géométriquement bien définie dans ledit espace et reste non affectée par les écarts de température.

Ceci implique en particulier une exécution précise du convergent-divergent ainsi qu'un positionnement géométrique rigoureux du débouché du conduit d'introduction de la phase liquide par rapport au rétreint défini par le convergent-divergent.

Or, dans le cas de traitements tels que par exemple séchage ou réactions mettant en jeu différentes phases dont l'une au moins est introduite ou portée à température élevée, le comportement mécanique des éléments du dispositif soumis à des températures élevées, par exemple supérieures à 400°C, est généralement affecté par des contraintes dues à la température. Si, de façon plus précise, l'on fait circuler dans l'enveloppe externe de révolution une phase gazeuse chaude (fumées de combustion ou air chaud) à une température au moins égale à celle précitée et que l'on alimente le conduit d'introduction avec une phase liquide, semifliquide ou pâteuse à température nettement inférieure à celle de la phase gazeuse, la dilatation de l'enveloppe externe provoque, comme la Demanderesse a pu le constater, un déplacement du conduit d'introduction qui lui est solidaire, et notamment de son débouché par rapport à l'axe et au plan du rétreint du convergentdivergent.

Dès lors, il en résulte des inconvénients majeurs tels que :
– d'abord, une mauvaise symétrie de l'écoulement "puits-tourbillons" et le déplacement de la zone d'impact entre les phases gaz-liquide (semi-liquide ou pâteuse), provoquant une diminution de l'efficacité du mélange entre les phases,
– puis l'interception directe d'une partie du jet liquide par les parois du divergent de sortie avec, et en raison de la température régnant sur les parois de l'enceinte, formation progressive de dépôts provenant soit de la décomposition du liquide, soit de la précipitation des solides véhiculés dans la suspension,
– enfin, l'occlusion de l'enceinte de séparation des phases, conséquence du nourrissement progressif et irrégulier de ses parois qui entraîne à son tour une accentuation du déséquilibre de l'écoulement au droit et à la sortie du rétreint.

Dès lors, il s'avère indispensable d'éviter que sous l'action de températures élevées, il puisse y avoir déréglage de la position du débouché du conduit d'introduction par rapport au rétreint du convergent-divergent.

C'est pourquoi la Demanderesse, poursuivant ses recherches dans ce domaine, a étudié et mis au point un perfectionnement des dispositifs de l'art antérieur de façon à éviter les inconvénients précités, ces dispositifs perfectionnés étant destinés à la mise en contact de fluides se présentant sous la forme de phases différentes dont l'une au moins en mouvement hélicoïdal est sous forme gazeuse et chaude.

Le dispositif perfectionné selon l'invention comportant une enveloppe externe de révolution, munie dans sa partie supérieure d'un fond et dans sa partie inférieure d'un convergent-divergent définissant un passage restreint dans lequel circule la phase gazeuse et chaude animée d'un mouvement hélicoïdal et débouche axialement l'extrémité aval d'un conduit d'introduction de l'une des autres phases se présentant sous l'état liquide, pâteux ou sous forme de suspension, se caractérise en ce que dans le but de libérer toutes les contraintes thermiques de l'enveloppe de révolution et du fond supérieur et de maintenir l'extrémité aval, encore appelée débouché, du conduit d'introduction dans sa position de réglage initial par rapport à l'axe et au plan du passage restreint, l'extrémité amont dudit conduit est désolidarisée de l'enveloppe externe de révolution par un moyen élastique, étanche et propre à encaisser les dilatations dues aux différences de température entre conduit et enveloppe.

Ce moyen selon l'invention évite d'abord que toute déformation de l'enveloppe externe de révolution consécutive à une dilatation thermique de ladite enveloppe, provoque un déplacement du conduit d'introduction qui, dans les réalisations décrites dans l'art antérieur, lui était entièrement solidaire.

Ce moyen assure, de plus, une étanchéité au niveau de la liaison entre conduit d'introduction et enveloppe externe de révolution en empêchant toute sortie vers l'extérieur des gaz ou fumées introduits dans cette enveloppe.

Le moyen étanche et élastique peut être réalisé à l'aide d'un soufflet préférentiellement métallique comportant un certain nombre de spires absorbant les déformations de l'enveloppe externe au voisinage de son raccordement avec le conduit d'introduction.

Il peut être également réalisé à l'aide d'un ensemble télescopique tel que, par exemple, presse-garniture, muni de ressorts et de garnitures d'étanchéité placés entre les différents éléments coulissants de cet ensemble comparables à ceux que l'on emploie sur des dispositifs d'étanchéité d'arbres en rotation.

Dans ce dernier cas, le moyen assurant l'étanchéité est conçu de manière à accepter simultanément un déplacement axial et un léger déplacement radial.

Les garnitures d'étanchéité sont, en général, réalisées à partir de tous matériaux connus de l'homme de l'Art remplissant cette fonction en un milieu gazeux et chaud, tel que par exemple, anneaux de graphites, fibres minérales imprégnées ..., mais de façon avantageuse ces garnitures d'étanchéité peuvent être constituées par des tresses en amiante résistant à des températures élevées.

L'assemblage de l'extrémité inférieure du moyen élastique, étanche, propre à encaisser les dilatations, et de l'enveloppe externe de révolution est réalisé à l'aide de pièces intermédiaires telles que des brides munies de joints destinés à éviter tout passage de gaz ou de fumées entre l'extrémité inférieure dudit moyen et de l'enveloppe.

De la même façon, l'extrémité supérieure du moyen précité est rendue solidaire du conduit d'introduction à l'aide de pièces intermédiaires telles que des brides munies de joints étanches empêchant également tout passage de gaz ou de fumées entre l'extrémité supérieure dudit moyen et du conduit d'introduction.

Selon une forme de réalisation de la présente invention et afin que la position du débouché du conduit d'introduction par rapport à l'axe et au plan du rétreint du convergent-divergent ne soit pas affectée par les écarts de déformation entre conduit d'introduction et enveloppe externe dus à l'action de la température, on complète la désolidarisation du conduit et de l'enveloppe de révolution par des moyens propres à maintenir ledit positionnement dans son réglage initial.

Dans ce but et afin de constituer un premier point fixe, le convergent-divergent est à hauteur de son rétreint rendu solidaire d'une structure externe rigide supportant le dispositif.

A l'extérieur de l'enveloppe de révolution, et afin de constituer un deuxième point fixe, l'extrémité amont du conduit d'introduction est également rendue solidaire du rétreint du convergent-divergent, par l'intermédiaire de ladite structure.

De cette façon, l'extrémité amont du conduit d'introduction et le rétreint du convergent-divergent constituent deux points fixes du dispositif, associés, rigidifiés l'un par rapport à l'autre, insensibles aux effets de la température et, dès lors, ces deux points fixes assurent le maintien du débouché du conduit d'introduction dans sa position de réglage initial par rapport à l'axe et au plan du rétreint.

La structure de liaison externe peut avoir l'aspect d'une potence ou d'un portique et être constituée, par exemple, à l'aide d'une charpente métallique ou d'un ouvrage en béton qui, de façon avantageuse, supportent le dispositif.

La fixation du rétreint du convergent-divergent et de l'extrémité amont du conduit d'introduction sur cette structure est effectuée à l'aide de pièces, telles que par exemple cales d'épaisseur ou vis-vérins, permettant un réglage précis du positionnement du conduit d'introduction et du rétreint du convergent-divergent lors du montage initial.

Mais il est nécessaire, pour conserver à chaud ce réglage, que le conduit d'introduction désolidarisé de l'enveloppe externe de révolution et rendu solidaire du rétreint du convergent-divergent par son extrémité amont ne puisse se déformer sous l'action de la température à laquelle il est exposé. Dans ce but et selon la même forme de réalisation de la présente invention, le conduit d'introduction est muni sur toute sa longueur d'un moyen de refroidissement externe assurant en cours de fonctionnement son maintien à une température suffisamment basse pour éviter toute dilatation de ce conduit et par suite toute modification du réglage de son positionnement.

Le refroidissement peut être effectué, par exemple, à l'aide d'un tube concentrique au conduit d'introduction dans lequel on assure une circulation d'un fluide frigo-porteur.

Mais il est possible que l'entrée du conduit d'introduction soit positionnée sur l'enveloppe externe de révolution, non pas dans l'axe de cette enveloppe, mais latéralement, le débouché du conduit restant coaxial à l'enveloppe. Ce conduit présente dans ce dernier cas sur toute ou partie de sa longueur un profil non plus rectiligne mais curviligne. Il est alors difficile de réaliser une gaine de refroidissement à l'aide d'un tube en un seul élément concentrique épousant sur toute sa longueur le profil du conduit d'introduction. De façon avantageuse, on est amené à constituer cette gaine soit, par exemple, à l'aide d'éléments tubulaires de courte longueur enfilés sur le conduit d'introduction et assemblés par soudure de façon à constituer une enveloppe continue, soit encore à l'aide de soufflets métalliques épousant facilement la courbure du conduit, soit encore d'un tube de petit diamètre enroulé en spirales jointives sur le conduit, le liquide de refroidissement circulant à l'intérieur de ce tube.

La présente invention sera mieux comprise à l'aide de schémas et exemples suivants qui sont donnés à titre illustratif sans être pour autant limitatifs.

La figure 1 est une coupe verticale et axiale du dispositif selon l'invention dont le conduit d'introduction est coaxial à l'enveloppe externe de révolution et dont le moyen élastique, étanche et propre à encaisser les dilatations est un soufflet métallique.

La figure 2 est une coupe verticale et axiale dudit dispositif dont le conduit d'introduction est positionné latéralement sur l'enveloppe externe de révolution, le débouché dudit conduit étant coaxial à l'enveloppe et dont le moyen élastique, étanche et propre à encaisser les dilatations est un soufflet métallique.

La figure 3 est une coupe verticale et axiale dudit dispositif dont le conduit d'introduction est coaxial à l'enveloppe et dont le moyen élastique, étanche et propre à encaisser les dilatations est un ensemble télescopique.

La figure 4 décrite dans l'exemple d'application est une coupe verticale et axiale d'un dispositif issu de l'art antérieur, dont le conduit d'introduction est coaxial à l'enveloppe externe de révolution et solidaire du fond supérieur de ladite enveloppe.

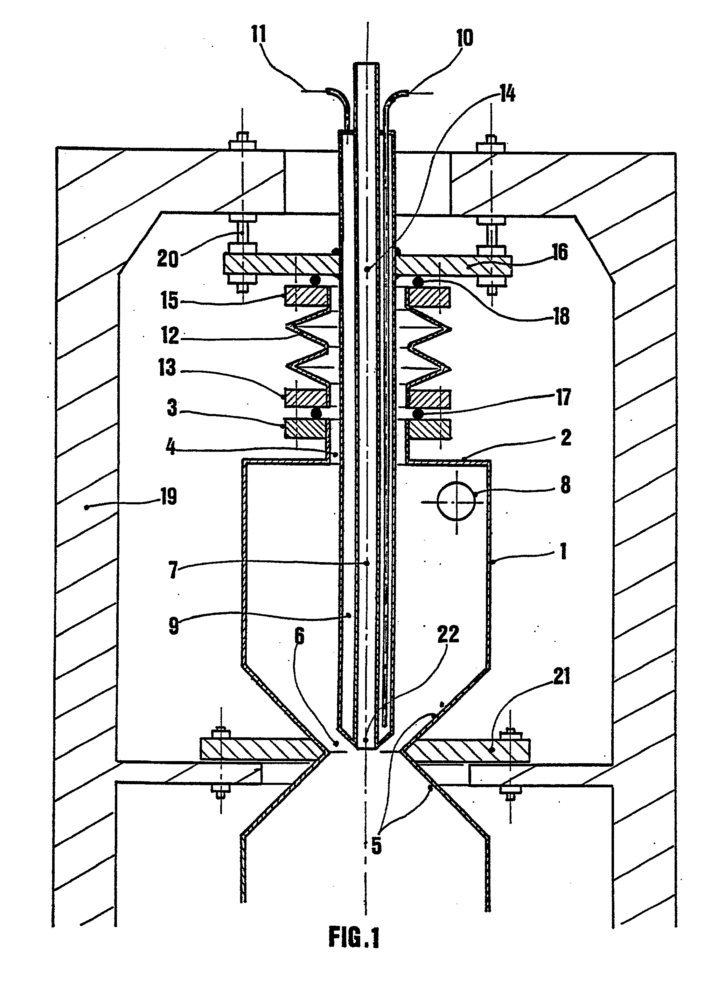

Selon la figure 1, le dispositif se compose d'une enveloppe externe de révolution (1), munie dans sa partie supérieure d'un fond (2), comportant une bride (3) et un espace évidé (4) et, dans sa partie inférieure, d'un convergent-divergent (5) délimitant un passage restreint (6) dans lequel débouche un conduit d'introduction (7) traversant l'espace évidé (4). Ladite enveloppe comporte une tubulure (8) d'introduction de la phase gazeuse chaude.

Le conduit d'introduction (7) comporte une gaine de refroidissement (9) dans laquelle circule un fluide de refroidissement introduit par la tubulure (10) et sortant par la tubulure (11).

Le dispositif comporte également un moyen élastique, étanche et propre à encaisser les dilatations, constitué par un soufflet (12) rendu solidaire du fond supérieur (2) par l'intermédiaire d'une bride (13) et de la partie amont (14) du conduit d'introduction (7) par l'intermédiaire d'une bride (15), fixée sur une collerette (16) de la gaine de refroidissement (9), ladite collerette étant solidaire du conduit d'introduction (7).

L'étanchéité entre le soufflet (12), la bride (3) et la collerette (16) est assurée au moyen des joints (17) et (18).

La collerette (16) fixée sur la gaine de refroidissement (9) est rendue solidaire de la structure de liaison externe (19) par l'intermédiaire de vis-vérins (20) permettant le réglage de positionnement du conduit d'introduction (7).

Le convergent-divergent (5) est, à la hauteur du rétreint (6), rendu solidaire de la structure (19) par l'intermédiaire d'une collerette (21).

De cette manière, la position du débouché (22) du conduit d'introduction (7) est aisément réglée par rapport à l'axe et au plan du rétreint (6) et maintenu de façon rigoureuse quelles que soient les conditions de fonctionnement du dispositif.

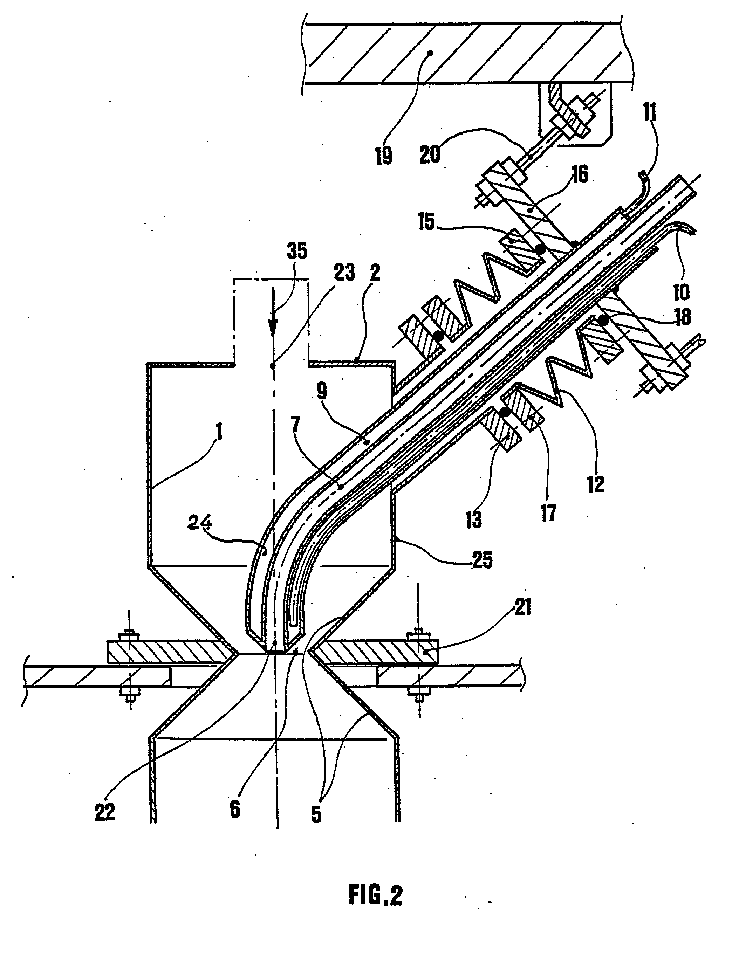

Selon la figure 2, le dispositif se compose d'une enveloppe externe de révolution (1), munie dans sa partie supérieure d'un fond (2) comportant une ouverture (23) permettant l'introduction coaxiale selon la flèche (35) de la phase gazeuse chaude animée d'un mouvement hélicoïdal provenant d'un générateur (non représenté) de fumées ou d'air chaud et, dans sa partie inférieure, d'un convergent-divergent (5) délimitant un passage restreint (6) dans lequel débouche un conduit d'introduction (7).

Le conduit d'introduction (7), de forme partiellement curviligne, comporte une gaine de refroidissement (9) prolongée dans la partie curviligne (24) jusqu'au débouché (22) dudit conduit. A l'intérieur de la gaine de refroidissement circule un fluide frigo-porteur introduit par la tubulure (10) et sortant par la tubulure (11).

Le dispositif comporte, de plus, un moyen élastique, étanche et propre à encaisser les dilatations, constitué par un soufflet (12), rendu solidaire de la paroi latérale (25), de l'enveloppe (1) par l'intermédiaire d'une bride (13) et de la partie amont du conduit d'introduction (7) par l'intermédiaire d'une bride (15) fixée sur une collerette (16) de la gaine de refroidissement (9), ladite collerette étant solidaire du conduit d'introduction (7).

L'étanchéité entre le soufflet (12), la bride (3) et la collerette (16) est assurée au moyen des joints (17) et (18).

La collerette (16), fixée sur la gaine de refroidissement (9), est rendue solidaire de la structure de liaison externe (19) par l'intermédiaire de vis-vérins (20) permettant le réglage -positionnement- du conduit d'introduction (7).

Le convergent-divergent (5) est également à la hauteur du rétreint (6) rendu solidaire de la structure (19) par l'intermédiaire d'une collerette (21).

De cette manière, la position du débouché (22) du conduit d'introduction (7) est facilement réglée par rapport à l'axe et au plan du rétreint (6) et maintenue dans cette position quelles que soient les conditions de fonctionnement du dispositif.

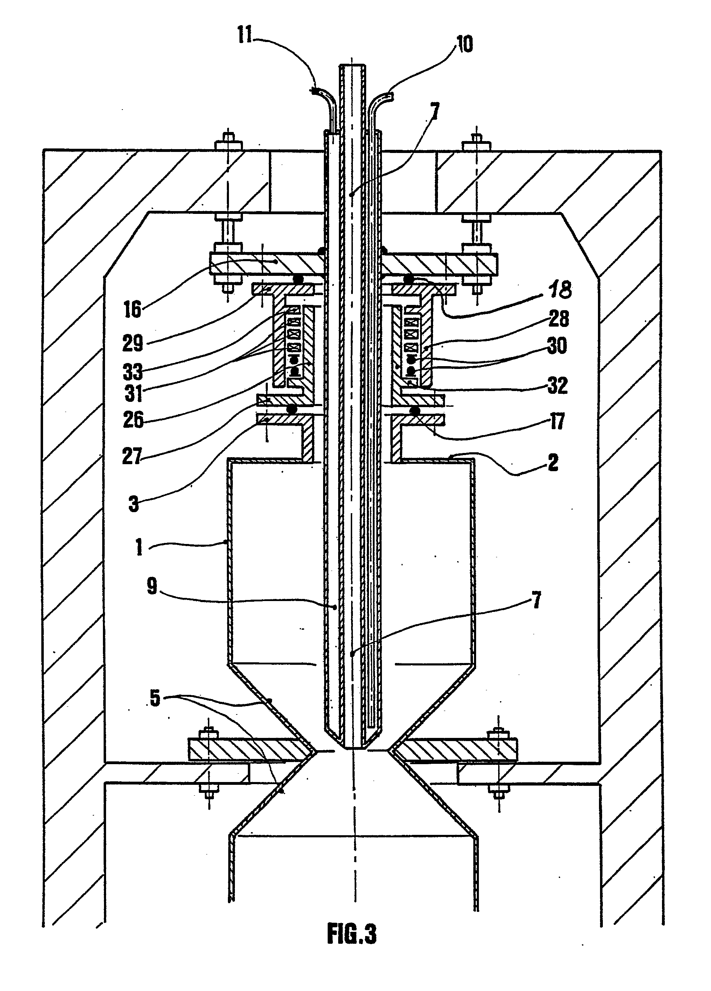

Selon la figure 3 comportant les mêmes éléments généraux que dans la figure 1, c'est-à-dire l'enveloppe externe de révolution (1), le convergent-divergent (5) et le conduit d'introduction (7), le moyen élastique, étanche et propre à encaisser les dilatations est constitué par un ensemble presse-garniture comportant un premier élément cylindrique (26) rendu solidaire de la bride (3) du fond supérieur (2) par l'intermédiaire d'une bride (27), et un second élément (28) externe et coaxial au précédent, rendu solidaire de la collerette (16) de la gaine de refroidissement (9) par l'intermédiaire d'une bride (29).

L'étanchéité entre les deux éléments cylindriques (26) et (28) constitutifs de l'ensemble presse-garniture, est assurée par un ensemble de ressorts (30) et de garnitures d'étanchéité (31), lesdits ressorts et garnitures prenant appui sur les butées (32) et (33). Tandis que l'étanchéité entre l'ensemble presse-garniture d'une part, la bride (3) et la collerette (16) d'autre part, est assurée au moyen des joints (17) et (18).

Exemple

On a exploité industriellement un dispositif réalisé selon l'art antérieur pour le séchage d'une matière minérale en suspension dans un milieu aqueux en ayant l'obligation après séchage de retrouver la granulométrie qu'avait la matière minérale avant séchage.

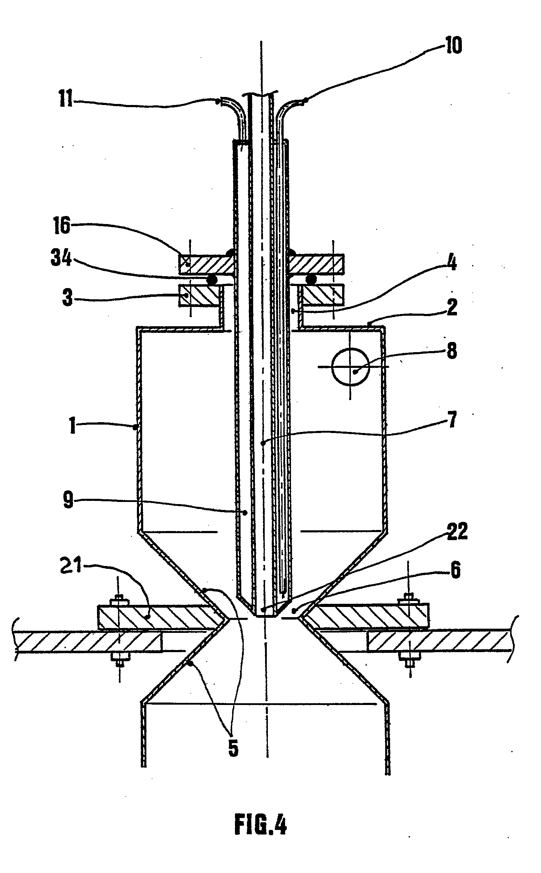

Le dispositif selon l'art antérieur illustré par la figure 4 se composait d'une enveloppe externe de révolution (1), munie dans sa partie supérieure d'un fond (2), comportant une bride (3) et un espace évidé (4) et dans sa partie inférieure d'un convergent-divergent délimitant un passage restreint (6) dans lequel circulait la phase gazeuse et chaude animée d'un mouvement hélicoïdal et dans lequel débouchait un conduit d'introduction (7) de la suspension à traiter traversant l'espace évidé (4).

Ladite phase gazeuse et chaude était introduite par la tubulure (8). Le conduit d'introduction (7) comportait une gaine de refroidissement (9) dans laquelle circulait un fluide de refroidissement introduit par la tubulure (10) et sortant par la tubulure (11).

Le conduit d'introduction (7) était fixé de façon rigide sur le fond supérieur (2) par l'intermédiaire des brides (3) et (16) entre lesquelles était placé un joint d'étanchéité (34).

Le passage restreint (6) du convergent-divergent (5) avait un diamètre de 310 mm et le débouché (22) du conduit d'introduction (7) avait un diamètre de 233 mm et était lors du réglage avant mise en marche positionné coaxialement par rapport à l'enveloppe (1) et dans le plan du passage restreint (6). Le jeu annulaire était donc de 38,5 millimètres.

Les conditions de fonctionnement du dispositif étaient les suivantes:
– diamètre moyen en μm de la matière minérale: 2
– concentration en % du poids de la suspension en matière minérale: 64
– débit massique de solide sec en tonnes/heure: 5
– température des fumées à l'entrée en degrés C: 700
– température du produit sec sortant en degrés C: 120

Après cinq mois de fonctionnement du dispositif en continu au cours desquels on avait observé la formation d'agglomérats (6% en poids), on a constaté une occlusion quasi-totale de la sortie du convergent-divergent au-delà duquel s'étaient accumulées 3,2 tonnes de matières minérales constituant sur les parois un enrochement très dense.

On a, dès lors, observé une déformation verticale du fond supérieur mesurée égale à 62 mm, provoquant un déplacement vers le haut du conduit d'introduction de la suspension, et une excentration du débouché (22) dudit conduit d'introduction de la suspension, par rapport à l'axe du rétreint telle que l'on pouvait mesurer selon un premier diamètre une réduction du jeu annulaire à 20 mm et selon un second diamètre perpendiculaire au premier une augmentation du jeu annulaire à 57 mm.

Après modification du dispositif de l'art antérieur, pour le rendre conforme à l'invention selon la figure 1, c'est-à-dire après la mise en place d'un moyen élastique, étanche et propre à encaisser les dilatations (soufflet 12), le dispositif perfectionné a été remis en service, en lui conservant les mêmes définitions géométriques que dans l'art antérieur, en particulier celles concernant le passage restreint (6) (diamètre de 310 mm), et le réglage de positionnement du conduit d'introduction (jeu annulaire de 38,5 mm).

Les conditions de fonctionnement du dispositif perfectionné ont été maintenues identiques à celles pratiquées dans l'art antérieur, c'est-à-dire la même suspension de matières minérales à traiter, selon les mêmes conditions de températures et de débits.

Après plusieurs années de fonctionnement industriel en continu, aucun dépôt de matières minérales n'a été constaté à la sortie du convergent-divergent, ni déréglage du positionnement du débouché (22) du conduit d'introduction de la suspension, tant par rapport à l'axe du rétreint (6) que de son plan : le jeu annulaire était toujours de 38,5 mm.

De plus, pendant cette longue période de fonctionnement sans enrochement, le dispositif selon l'invention a permis de produire par séchage de la suspension aqueuse précitée, une matière minérale pulvérulente dont la granulométrie était la même avant et après séchage: la matière minérale ainsi produite était quasiment exempte d'agglomérats (5 ppm en poids d'agglomérats) par opposition à la matière minérale produite par le dispositif de l'art antérieur (6% en poids d'agglomérats).

Ainsi, le dispositif selon l'invention a permis, par comparaison avec les dispositifs de l'art antérieur, de libérer toutes les contraintes thermiques de l'enveloppe externe de révolution (1) et du fond (2), de maintenir l'extrémité aval du conduit d'introduction (7) dans la position de réglage initial par rapport à l'axe et au plan du passage restreint (6) et d'assurer à la liaison entre ledit conduit (7) et le fond supérieur (2) de l'enveloppe externe de révolution (1) une excellente étanchéité.

**Revendications**

1. Dispositif pour la mise en contact de fluides se présentant sous la forme de phases différentes dont l'une au moins est sous forme gazeuse et chaude comportant une enveloppe externe de révolution (1) munie dans sa partie supérieure d'un fond (2) et dans sa partie inférieure d'un convergent-divergent (5) définissant un passage restreint (6) dans lequel circule la phase gazeuse et chaude animée d'un mouvement hélicoïdal et dans lequel débouche axialement l'extrémité aval d'un conduit d'introduction (7) de l'une des autres phases se présentant sous l'état liquide ou pâteux ou sous forme d'une suspension, caractérisé en ce que, dans le but de libérer toutes les contraintes thermiques de l'enveloppe (1) et du fond supérieur (2) et de maintenir l'extrémité aval du conduit d'introduction (7) dans sa position de réglage initial par rapport à l'axe et au plan du passage restreint (6), l'extrémité amont dudit conduit est désolidarisée de l'enveloppe externe de révolution (1) par un moyen élastique, étanche et propre à encaisser les dilatations dues aux différences de température entre conduit et enveloppe.

2. Dispositif pour la mise en contact de fluides se présentant sous la forme de phases différentes selon la revendication 1, caractérisé en ce que le moyen élastique, étanche et propre à encaisser les dilatations est un soufflet de dilatation.

3. Dispositif pour la mise en contact de fluides se présentant sous la forme de phases différentes selon la revendication 1, caractérisé en ce que le moyen élastique, étanche et propre à encaisser les dilatations est un ensemble tubulaire télescopique muni de ressorts et de garnitures d'étanchéité.

4. Dispositif pour la mise en contact de fluides se présentant sous la forme de phases différentes selon l'une quelconque des revendications 1 à 3, caractérisé en ce que le moyen élastique, étanche et propre à encaisser les dilatations est rendu, par son extrémité inférieure, solidaire de l'enveloppe externe de révolution et, par son extrémité supérieure, solidaire du conduit d'introduction à l'aide de pièces intermédiaires assurant la liaison dudit moyen, d'une part avec l'enveloppe externe de révolution, et d'autre part avec le conduit d'introduction.

5. Dispositif pour la mise en contact de fluides se présentant sous la forme de phases différentes selon la revendication 4, caractérisé en ce que les pièces intermédiaires sont des brides.

6. Dispositif pour la mise en contact de fluides se présentant sous la forme de phases différentes selon l'une quelconque des revendications 1 à 5, caractérisé en ce que le conduit d'introduction est solidaire du convergent-divergent formant rétreint par l'intermédiaire d'une structure rigide externe à l'enveloppe de révolution.

7. Dispositif pour la mise en contact de fluides se présentant sous la forme de phases différentes selon l'une quelconque des revendications 1 à 6, caractérisé en ce que le conduit d'introduction est muni d'un moyen de refroidissement externe.

8. Dispositif pour la mise en contact de fluides se présentant sous la forme de phases différentes selon l'une quelconque des revendications 1 à 7, caractérisé en ce que le conduit d'introduction est rectiligne et son extrémité amont est coaxiale à l'enveloppe externe de révolution.

9. Dispositif pour la mise en contact de fluides se présentant sous la forme de phases différentes selon l'une quelconque des revendications 1 à 7, caractérisé en ce que le conduit d'introduction est partiellement curviligne et son extrémité amont est placée latéralement sur l'enveloppe externe de révolution, l'extrémité aval du conduit étant coaxiale à l'enveloppe externe de révolution.

**Patentansprüche**

1. Vorrichtung zum In-Berührung-Bringen von in unterschiedlichen Phasen vorliegenden Fluida, von denen mindestens eines gasförmig und heiß ist, bestehend aus einer äußeren Rotationshülle (1), die in ihrem oberen Teil mit einem Boden (2) und in ihrem unteren Teil mit einer Düse-Diffusor-Anordnung (5) ausgestattet ist, die einen engen Durchgang (6) ausbildet, in der die gasförmige und heiße Phase mit einer schraubenförmigen Bewegung zirkuliert und in den axial das Ausströmende eines Einleitungsrohres (7) für eine der anderen, flüssig, pastenförmig oder als Suspension vorliegenden Phasen einmündet, dadurch gekennzeichnet, daß zur Freisetzung aller Wärmespannungen der Hülle (1) und des oberen Bodens (2) und zur Erhaltung der ursprünglich eingestellten Stellung des Ausströmendes des Einleitungsrohres (7) relativ zur Achse und zur Ebene des engen Durchgangs (6) das obere Ende des genannten Rohres von der äußeren Rotationshülle (1) durch ein elastisches, dichtes und zur Aufnahme der Dehnungen aufgrund der Temperaturunterschiede zwischen Rohr und Hülle geeignetes Mittel getrennt verbunden ist.

2. Vorrichtung zum In-Berührung-Bringen von in unterschiedlichen Phasen vorliegenden Fluida nach Patentanspruch 1, dadurch gekennzeichnet, daß das elastische, dichte und zur Aufnahme der Dehnungen geeignete Mittel ein Dehnungsausgleicher ist.

3. Vorrichtung zum In-Berührung-Bringen von in unterschiedlichen Phasen vorliegenden Fluida nach Patentanspruch 1, dadurch gekennzeichnet, daß das elastische, dichte und zur Aufnahme der Dehnungen geeignete Mittel eine zusammenschiebbare, mit Federn und Dichtungen versehene Röhrenanordnung ist.

4. Vorrichtung zum In-Berührung-Bringen von in unterschiedlichen Phasen vorliegenden Fluida nach irgendeinem der Patentansprüche 1 bis 3, dadurch gekennzeichnet, daß das elastische, dichte und zur Aufnahme der Dehnungen geeignete Mittel an seinem unteren Ende mit der äußeren Rotationshülle und an seinem oberen Ende mit dem Einleitungsrohr durch Zwischenstücke verbunden ist, die die Verbindung des genannten Mittels mit der äußeren Rotationshülle einerseits und mit dem Einleitungsrohr andererseits gewährleisten.

5. Vorrichtung zum In-Berührung-Bringen von in unterschiedlichen Phasen vorliegenden Fluida nach Patentanspruch 4, dadurch gekennzeichnet, daß die Zwischenstücke Flansche sind.

6. Vorrichtung zum In-Berührung-Bringen von in unterschiedlichen Phasen vorliegenden Fluida nach irgendeinem der Patentansprüche 1 bis 5, dadurch gekennzeichnet, daß das Einleitungsrohr mit der eine Einschnürung bildende Düse-Diffusor-Anordnung durch eine starre Konstruktion außerhalb der äußeren Rotationshülle verbunden ist.

7. Vorrichtung zum In-Berührung-Bringen von in unterschiedlichen Phasen vorliegenden Fluida nach irgendeinem der Patentansprüche 1 bis 6, dadurch gekennzeichnet, daß das Einleitungsrohr mit einem Mittel zur Kühlung von außen versehen ist.

8. Vorrichtung zum In-Berührung-Bringen von in unterschiedlichen Phasen vorliegenden Fluida nach irgendeinem der Patentansprüche 1 bis 7, dadurch gekennzeichnet, daß das Einleitungsrohr gerade und sein oberes Ende mit der äußeren Rotationshülle koaxial ist.

9. Vorrichtung zum In-Berührung-Bringen von in unterschiedlichen Phasen vorliegenden Fluida nach irgendeinem der Patentansprüche 1 bis 7, dadurch gekennzeichnet, daß das Einleitungsrohr zum Teil gekrümmt und sein oberes Ende seitlich auf der äußeren Rotationshülle angeordnet ist und daß das untere Ende des Rohres mit der äußeren Rotationshülle koaxial ist.

**Claims**

1. Device for bringing into contact fluids in the form of different phases at least one of which is in gaseous and hot form, comprising an outer enclosure of revolution (1) provided in its upper part with an end plate (2) and in its lower part with a venturi (5) defining a restricted passage (6) in which the gaseous and hot phase travels driven in a helical motion and into which there opens axially the downstream end of an entry conduit (7) for one of the other phases which are in the liquid or pasty state or in the form of a suspension, characterized in that, in order to release all the thermal stresses in the enclosure (1) and in the upper end plate (2) and to keep the downstream end of the entry conduit (7) in its initial setting position relative to the axis and to the plane of the restricted passage (6), the upstream end of the said conduit is decoupled from the outer enclosure of revolution (1) by a resilient, leakproof means capable of taking up the dilations due to the differences in temperature between the conduit and the enclosure.

2. Device for bringing into contact fluids which are in the form of different phases according to claim 1, characterized in that the resilient, leakproof means capable of taking up the dilations is an expansion bellows.

3. Device for bringing into contact fluids which are in the form of different phases according to claim 1, characterized in that the resilient, leakproof means capable of taking up the dilations is a telescopic tubular unit equipped with springs and packings.

4. Device for bringing into contact fluids which are in the form of different phases according to any one of claims 1 to 3, characterized in that the resilient, leakproof means capable of taking up the dilations is, at its lower end, integrally attached to the outer enclosure of revolution and, at its upper end, is integrally attached to the entry conduit by means of intermediate components responsible for linking the said means, on the one hand, with the outer enclosure of revolution and, on the other hand, with the entry conduit.

5. Device for bringing into contact fluids which are in the form of different phases according to claim 4, characterized in that the intermediate components are flanges.

6. Device for bringing into contact fluids which are in the form of different phases according to any one of claims 1 to 5, characterized in that the entry conduit is integrally attached to the venturi forming a constriction by means of a rigid structure external to the enclosure of revolution.

7. Device for bringing into contact fluids which are in the form of different phases according to any one of claims 1 to 6, characterized in that the entry conduit is provided with a means for external cooling.

8. Device for bringing into contact fluids which are in the form of different phases according to any one of claims 1 to 7, characterized in that the entry conduit is rectilinear and its upstream end is coaxial with the outer enclosure of revolution.

9. Device for bringing into contact fluids which are in the form of different phases according to any one of claims 1 to 7, characterized in that entry conduit is partially curved and its upstream end is placed laterally on the outer enclosure of revolution, the downstream end of the conduit being coaxial with the outer enclosure of revolution.

**FIG.1**

FIG.2

**FIG.3**

FIG.4